## Europäisches Patentamt

## European Patent Office

## Office européen des brevets

(11) Publication number: **0 177 991**

**B1**

(12) **EUROPEAN PATENT SPECIFICATION**

(45) Date of publication of patent specification: **13.06.90**

(21) Application number: **85201400.0**

(22) Date of filing: **04.09.85**

(51) Int. Cl.⁵: **B 29 C 45/26, B 29 C 45/17 //
B29L17:00**

(54) Injection mould with insert piece and injection moulding unit for same.

(30) Priority: **07.09.84 NL 8402747
01.07.85 NL 8501893**

(43) Date of publication of application:
**16.04.86 Bulletin 86/16**

(45) Publication of the grant of the patent:
**13.06.90 Bulletin 90/24**

(84) Designated Contracting States:
**AT BE CH DE FR GB IT LI LU NL SE**

(56) References cited:
**CH-A- 372 546
DE-A-1 629 686
DE-B-1 232 727
FR-A- 695 443
FR-A-2 468 456
GB-A-1 462 622
US-A-3 989 436
US-A-4 374 636**

(73) Proprietor: **Nagron GIM Precision Tooling B.V.
Kanaaldijk Z.W. 7b
NL-5706 LD Helmond (NL)**

(72) Inventor: **van Poorten, Antonius
Suezlaan 22
NL-5752 BG Deurne (NL)**

(74) Representative: **Schumann, Bernard Herman
Johan et al
OCTROOIBUREAU ARNOLD & SIEDSMA
Sweelinckplein 1
NL-2517 GK The Hague (NL)**

Courier Press, Leamington Spa, England.

## Description

The invention relates to an injection mould for manufacturing disc-shaped objects comprising at least two mould parts which are mutually movable between a closed position, in which they bound a form cavity, said cavity being connected to a pressure conduit for introducing heated plastic under pressure in said cavity, and an opened position, in which a disc shaped object can be removed, at least one insert piece, securing means, connectable to a source of fluid under under-pressure for holding in a pre-selected position, at least partially as a result of said under-pressure, the or each insert piece against a wall of the form cavity, and punching means for punching a central hole out of a disc-shaped object, said punching means comprising a cylindrical part which forms part of the one mould portion, said cylindrical part having a front circumferential edge with a form adapted to the shape of the hole to be punched out of a disc-shaped object, said part being axially movable away from and towards the other mould portion.

An injection mould of such a type is known from e.g. US-A-3 989 436. For the manufacturing of specific objects, such as compact discs, numerical optical discs etc. it is desirable or even essential to provide the shaped objects with a central hole. A post-treatment for this purpose is known. According to the invention, however, use is made of the above-mentioned punching means for punching a central hole out of a shaped object. In this way the residual tension in the shaped object can be considerable smaller than in the case of a post-treatment.

According to the invention, the injection mould specified above is characterized by adjusting means to adjust the distance between the front-circumferential edge of said cylindrical part and the forming surface of the other mould portion situated opposite to it. By means of this adjusting means an empirical adjustment can be made such as to ensure the best possible quality of the edge of the central hole, which adjustment may be and generally will be different for different plastics. This construction further allows the use of cold injection as well as hot injection.

Different from the teachings of US-A-3 989 436, which disclose limiting means, the invention relates to adjusting means. The prior art specification does not contain any reference to the adjustability of the stroke of e.g. mould halve 16 relative to mould halve 17 as a result of the stroke limiting sleeve 70, 72, 74, which by means of bolt 71 is fixedly secured to the related surface. Such a well-known means which limits the stroke of two relatively movable parts is, basically different from the adjusting means according to the invention as specified above.

Particularly in view of allowing the determination of the optimum stroke of the punching means, the invention proposes an embodiment in which the adjusting means are operable from the outside. Also use may be made of operating means which are operative during the injection process, i.e. which move gradually during the injection moulding, e.g. from a position of maximum mutual distance to a position of a pre-selected minimum distance, for instance the distance zero, whilst also use may be made of an embodiment in which a reciprocating movement takes place during the injection moulding process.

The mould according to the invention may be characterized in that the insert piece is a sheet arranged against a flat wall and that said wall displays at least one recess connectable to an underpressure source. Such recess may take the form of e.g. an annular groove.

Preferably in this case the or each recess can extend in a circumferential zone of the wall, by which is also understood the zone around a central hole that may be present.

In a practical embodiment, the mould can be made in a form such that the sheet displays a central hole and mechanical means are also available for placing a holding said sheet in the pre-selected position by gripping on the rim of said hole.

In order to achieve an easy release of the sprue when the mould is opened, the variant is which the pressure conduit emerges in the form cavity via a diverging portion is to be recommended.

Preference is given to an embodiment which displays the characteristic that the wall of the form cavity opposite the mouth of the pressure conduit exhibits a central recess converging towards said form cavity, the bottom of which recess is formed by the end surface of an ejector which serves to eject the part detached from the shaped product in the punching out of the central hole.

The invention further has for its object an injection moulding unit for an injection mould of the type heretofore described. Such a unit is characterised by control means for actuating the underpressure source in at least the opened position of the mould.

The invention will now be explained on the basis of the annexed drawing of several arbitrarily chosen embodiments, to which the invention is not, however, restricted. In the drawing:

Fig. 1 - 5 show a longitudinal section through an injection mould according to the invention in diverse phases of a production cycle;

Fig. 6 shows a detail explaining the securing of the insert disc with mechanical and underpressure means;

Fig. 7 shows the detail VII from fig. 6; and

Fig. 8 shows a view corresponding to fig. 6 of a variant in which the insert disc is held in position solely by underpressure;

Fig. 9 shows a variant of the embodiment as according to fig. 8.

Fig. 10 shows a detail of an injection mould of which the recess, which is connected to suction means, is filled with a porous material; and

the figures 11 and 12 show two partially broken away sidelong views of injection moulds according to the invention which comprise punching means adjustable from the outside.

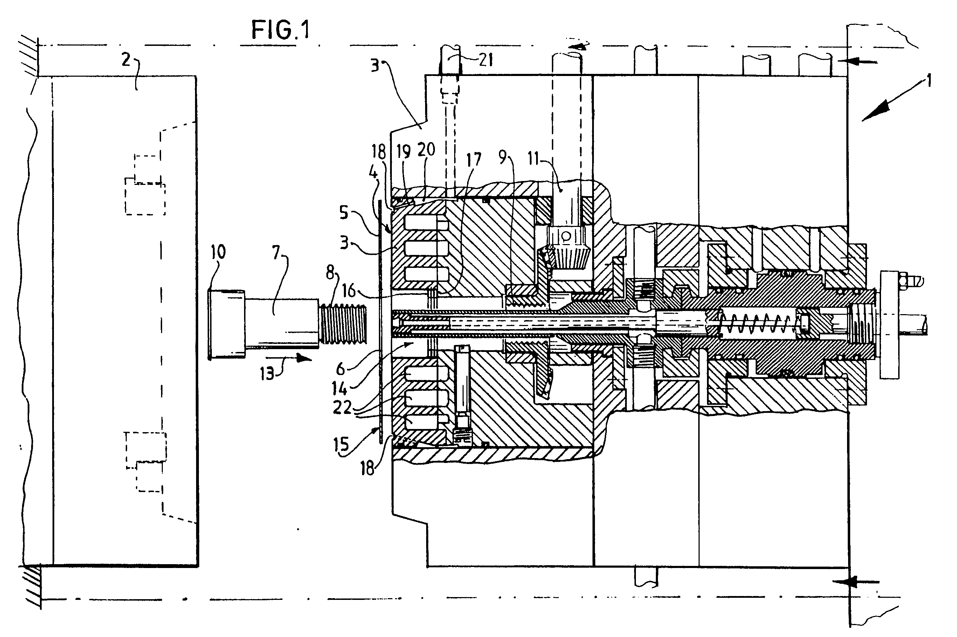

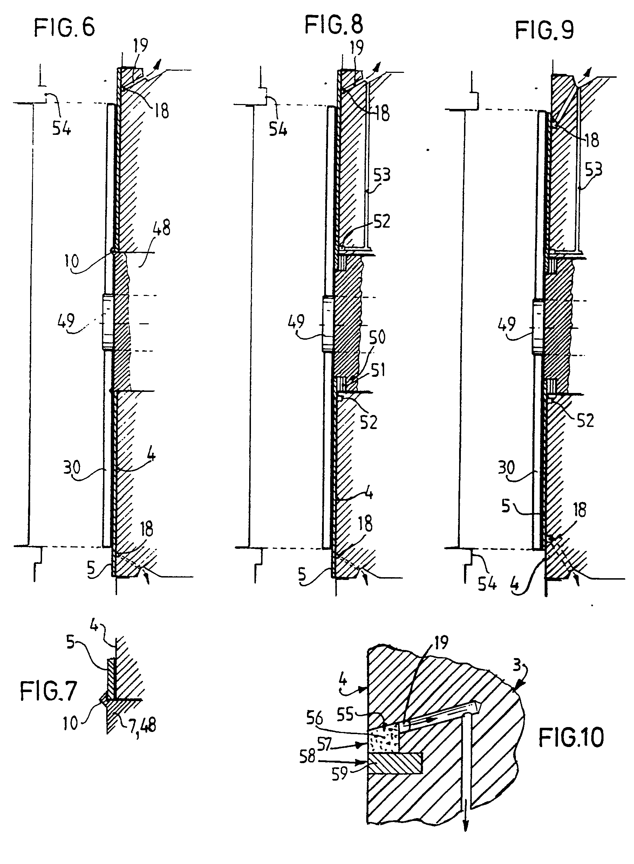

Fig. 1 shows an injection mould 1 according to the invention. This comprises a front mould 2 and a rear mould 3. Against the front surface 4 a nickel disc 5 can be placed which is provided with a central hole 6, and the disc 5 can be fixed against said front surface 4 by means of a disc holder 7. For this purpose, said disc holder 7 is firmly connectable with the rear mould 3 through screw thread 8 which co-operates with a threaded bush 9. A flange 10, the form of which is more clearly seen in fig. 7, grips onto the rim of the central hole 6. By rotating the threaded bush 9 through operation of a rotatable operating element 11 which co-operates with said bush 9 via a gear coupling set at a right angle to it, the disc holder 7 can be moved in the direction of the arrow 13 into a correspondingly formed cavity 14 of the rear mould 3, securing the nickel disc 5 against the front surface 4.

The mould 1 is used to manufacture compact discs. The nickel disc 5, which carries the digital information for manufacturing the compact discs on the surface directed to the left in the drawing, is manufactured in a thickness of 0.300 mm. with a tolerance of 0.025 mm. more or less. Depending on the thickness of a specific disc, change rings 16 having a total thickness of the disc can be put onto a shoulder 17 of the cavity 14.

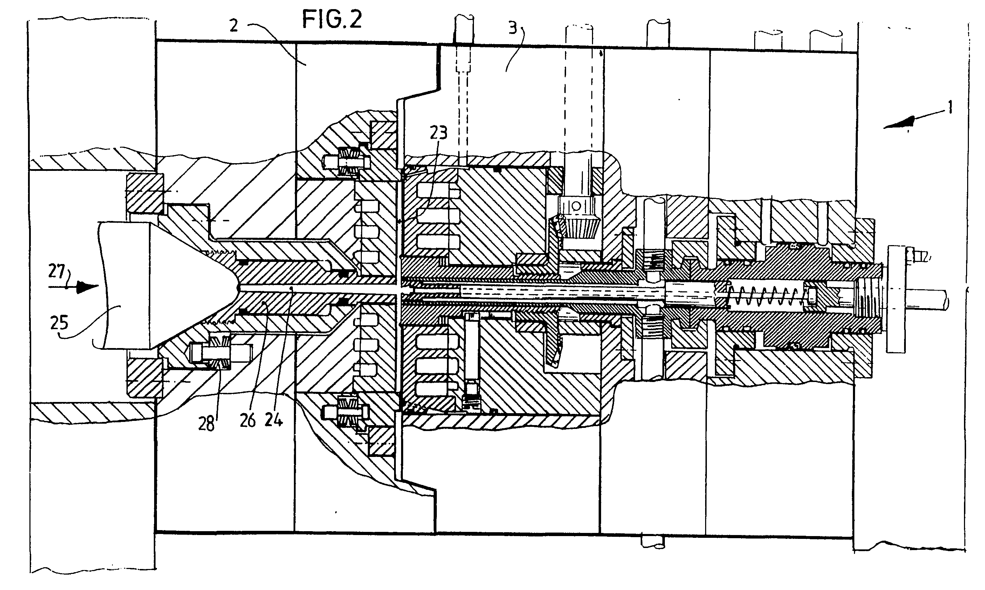

The clamping of the nickel disc 5 by means of the disc holder 7 takes place by gripping in the middle of said disc 5. The clamping is further assured by a ringshaped groove 18, which is connected via conduits 19 and a ring-shaped cavity 20 with a suction conduit 21. The rear mould 3 displays a spiral-shaped conduit 22 for cooling fluid. Particular reference is now made to fig. 2.

Fig. 2 shows the construction of the front mould 2, as well as the co-operation between same and the rear mould 3, which jointly bound a round disc-shaped form cavity 23. It will therefore also be apparent that fig. 2 shows the closed position of the mould 1. Here the form cavity 23 is connected via a pressure conduit 24, diverging towards said cavity 23, with the injection nozzle 25 of an undrawn injection moulding unit. The arrow 26 shows the relative displacement of said injection nozzle 25 to arrive at is operating position.

The pressure conduit 24 extends through a movable central position 26 of the front mould 2.

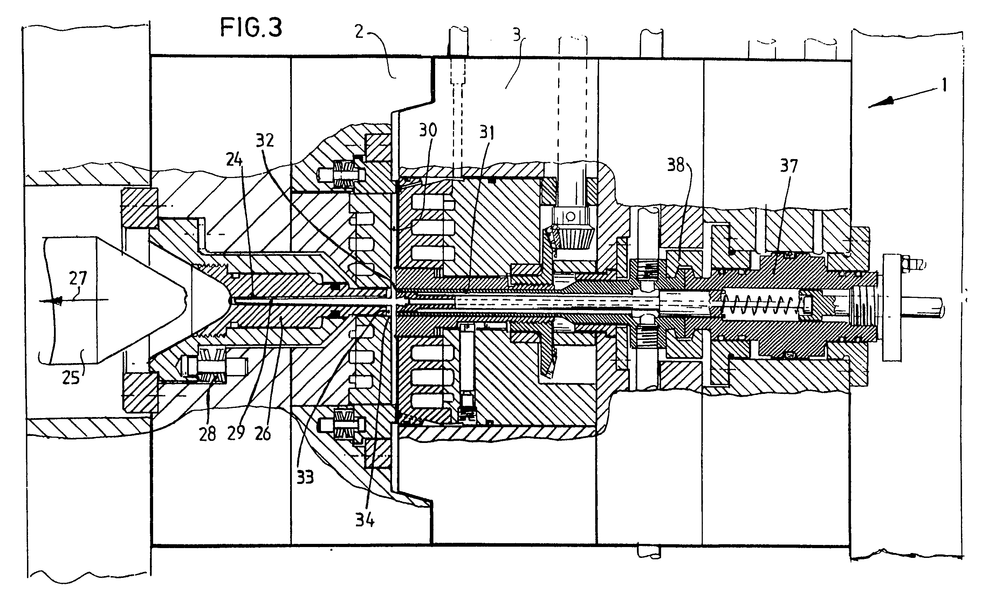

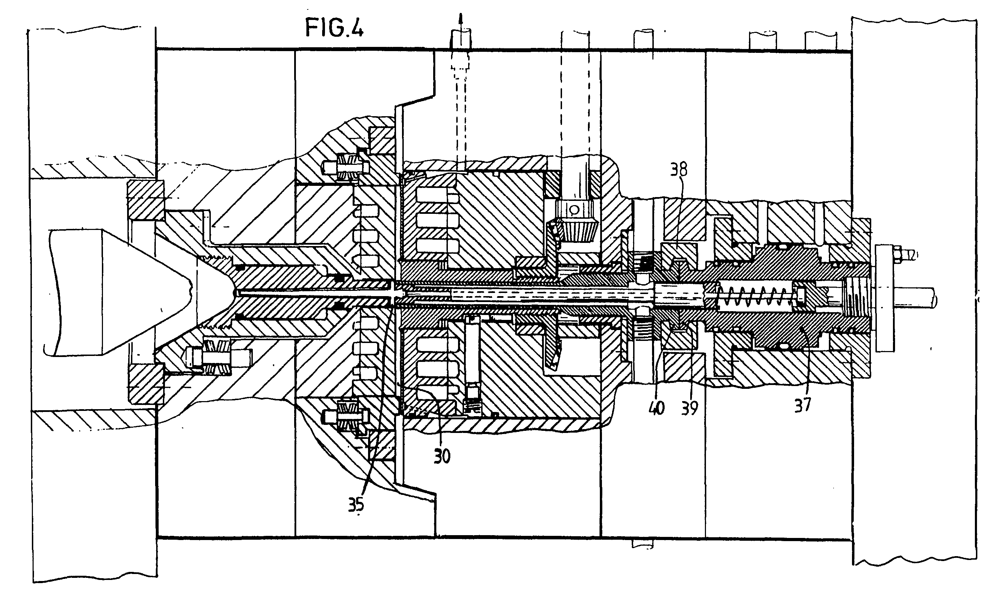

Fig. 3 shows how, by the backward displacement as according to the arrow 27 of the injection nozzle 25 through the operation of spring washers 28, the central position 26 is moved to the left, such that a sprue 29 of conical shape corresponding to that of the diverging pressure conduit 24 can release. Said sprue 29 of a shaped compact disc 30 can be detached from the latter by punching means, which serve to arrange a central hole in said compact disc 30. Said punching means are made in the form of a punching element 31, the diameter at the front edge 32 of which corresponds with that of the central cavity 33 in the front mould 2, in which the central portion 26 is movable. In this way the front edge 32 of the punching element 31 cooperates with the edge 34 of the cylindrical cavity 33 situated opposite to it to punch out a central part 35 from the compact disc 30 in the way shown in fig. 4 and so form a central hole therein.

The forward movement of the punching element 31 is achieved by feeding fluid under pressure to a pressure conduit 36, whereby a piston 37 is displaced to the left. Said piston 37 is connected with the punching element 31 via a coupling ring 38 consisting of two halves.

It is remarked here that said divided coupling ring 38, which co-operates with two flanges 39, 40 of respectively the piston 37 and the punching element 31 having conical envelope shaped surfaces, possesses an interior form corresponding to the shape of said surfaces, such that by connecting both halves of said coupling ring 38 with undrawn means a very simple but nevertheless reliable coupling is obtained between said piston 37 and said punching element 31.

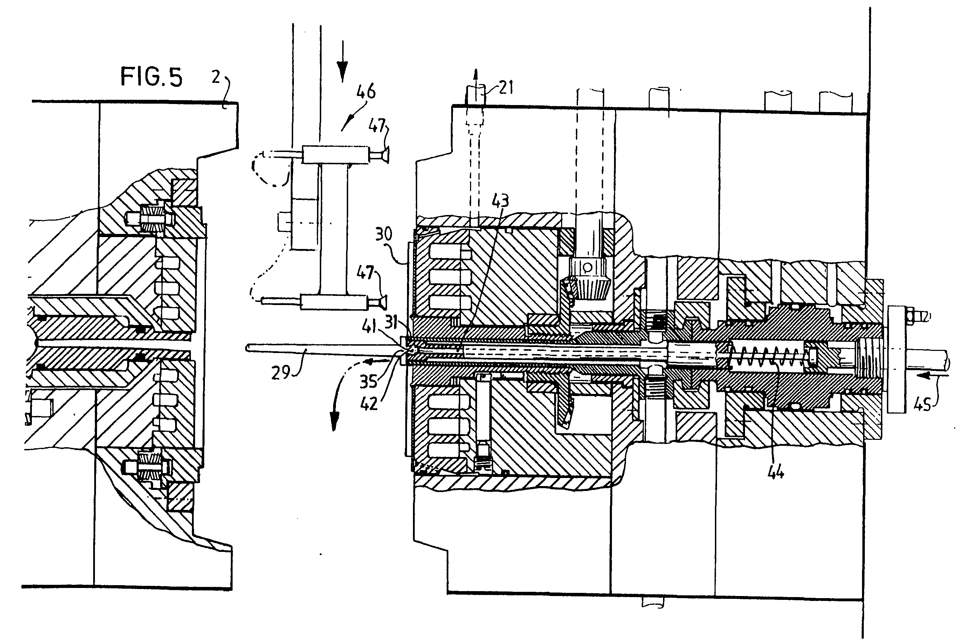

Fig. 5 shows that the central portion 35 and the conical sprue 29 which together form a whole are held in place on the front surface of the punching element 31. This is a result of the fact that an outwardly converging cavity 41 is present within said punching element 31 on its front surface, which, when the compact disc is formed, causes a part 42 to be formed in the centre of said disc and extending into said cavity 41, which part 42, because of the tapering form of said cavity 41, has a non-releasing connection with said punching element. The bottom of said cavity 41 is formed by the front surface of an ejector 43, which by displacing to the left as according to arrow 45 against the pressure from a spring 44 can apply a releasing force directed to the left on said part 42, whereby the waste material 29, 35, 42 is ejected.

The shaped compact disc 30 can now be removed by a manipulator 42 with suction pads 47, indicated schematically, and be conveyed for further treatment to the station concerned.

The suction conduit 21 is connected with a source of fluid under underpressure. Said source forms part of an undrawn injection moulding unit and is actuated by controlling means found therein, in any case during the phase shown in fig. 5, i.e. during the disposal of the sprue and associated waste material and the removal of the formed product.

Fig. 6 shows that a disc holder 48, at variance with disc holder 7 according to the embodiment heretofore discussed, can be provided on its front surface with a cylindrical portion 49, whereby the desired central hole in the compact disc can be directly formed.

Fig. 7 shows the form of the securing flange of the disc holder 7, 48.

Fig. 8 shows a variant in which a central element 50, which is situated in the same position as the disc holder 48 as according to fig. 6, is likewise provided on its front surface with the cylindrical portion 49 for forming a central hole in the compact disc 30. At variance with the previously discussed embodiment, however, said central element 50 is in this case not a disc holder in view of the fact that it is not provided on its front edge with the flange 10, as according to the foregoing figures and fig. 7 in particular, but the nickel disc 7 is held in position solely by underpressure. To this end not only is the ring-shaped groove 18 present in the circumferential zone of said nickel disc 5, but a second ring-shaped groove 52 is situated in the circumferential zone of the central hole of said disc, which groove is connected via conduit 53 and conduits 19 jointly with a source of fluid under underpressure.

Fig. 9 shows an embodiment which varies from that according to fig. 8 in that, in the closed position of the mould, the edge 54 does not press onto the nickel disc 5 but onto the front surface 4. The ring-shaped groove 18 extends within the edge 54 to hold the nickel disc 5 in place. Such an embodiment can be advantageous for example for making numeric optical discs (NODs).

Fig. 10 shows a recess 55 in the front surface 4 of the rear mould 3, in which first a sinter bronze packing piece 56 is placed as according to arrow 57, whereafter a packing piece 59 is arranged as according to arrow 58, whereby the porous packing piece 56 is held in place. The suction conduit 19 connects onto said recess 55.

It will be apparent that, depending on the embodiment, it can be desirable or essential also to actuate the underpressure source in a phase other than the opened mould position.

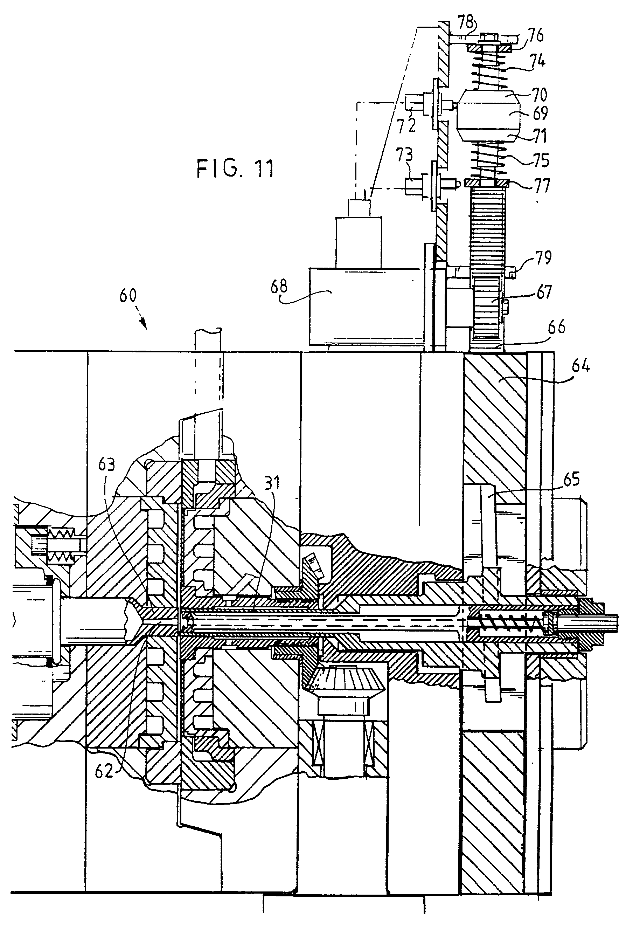

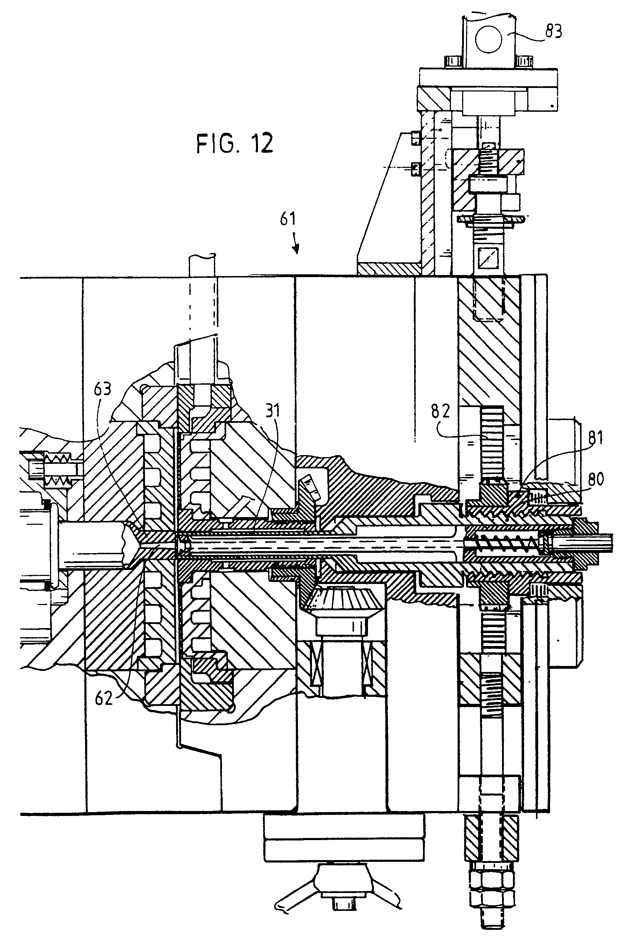

The figures 11 and 12 show respectively injection moulds 60 and 61, the construction of which corresponds largely with that of the mould 1 heretofore described. Said moulds 60 and 61 differ from the mould 1 in the sense that they are constructed especially for hot injection. This will be apparent from the form of the diverging pressure conduit 62 in a central portion 63, analogous respectively to the diverging pressure conduit 24 and the central portion 26 of the injection mould 1. More important, however, is the presence of adjustment means for adjusting the distance of the front edge 32 of the punching element 31 from the edge 34 of the cavity 33, in which respect reference is made to figure 3.

Attention is drawn to the fact that, at variance with the description relating to the mould 1, moulds 60 and 61 offer the possibility of the punching element 31 being able to move, if required during the injection moulding process. In view of the fact that in these circumstances the central portion 63 has not yet been withdrawn during the entry of the punching element 31, there is no question here of a punching operation in the strict sense of the word. The front edge 32 of said punching element 31 moves with great facility through the not yet hardened plastic.

The mould 60 as according to fig. 11 is provided with a sliding piece 64 which is coupled via a slightly inclined key way with an undrawn cam connected to the punching element 31. Said element 31 is secured against rotation by likewise undrawn means. This construction achieves that when the sliding piece 64 is moved up or downwards, said punching element 31 undergoes a corresponding axial displacement. In this way the position of same can be adjusted. A rack 66 is coupled to the sliding piece, said rack being driven via a pinion 67 by a hydromotor. A cam 69 supported by the toothed rack 66 co-operates via rise surfaces 70, 71 with microswitches 72, 73, the positions of which determine the one extreme position and the other extreme position of the punching element 31. With respect to inertia effects, compression springs 74 and 75 are present which push rings 76, 77 away from the cam 69. Said rings 67, 77 co-operate with fixed impact buffers 78, 79 as smooth stops.

Not drawn is the embodiment in which use is made of an electric stepping motor instead of the hydromotor 68 with accessory adjustable control. In this respect attention is drawn to the fact that the use of a stepping motor dispenses with the relatively complicated control with cams and microswitches, and use can be made of digital counting means, having for example adjusting thumb wheels, to determine the stroke of the punching element.

Fig. 12 shows a variant where the punching element 31 is supported by an end 80 provided with screw thread which co-operates with a correspondingly rotating drivable part 81, which in turn can be driven rotatingly by a toothed rack 82. For driving said rack use is made in this case of a cylinder piston unit 83. It will be apparent that the threaded end 80 must be secured against rotation. These securing means are not reproduced in fig. 12 for the sake of clarity in the drawing. They can for example consist of a key co-operating with a key-way in the known manner.

## Claims

1. Injection mould (1,2,3) for manufacturing disc-shaped objects (30) comprising

at least two mould parts (2,3) which are mutually movable between a closed position, in which they bound a form cavity (23), said cavity (23) being connected to a pressure conduit (24) for introducing heated plastic under pressure in said cavity (23), and an opened position, in which a disc-shaped object (30) can be removed, at least one insert piece (5) securing means (10, 55, 56), connectable to a source of fluid under under-pressure for holding in a pre-selected position, at least partially as a result of said under-pressure, the or each insert piece (5) against a wall (4) of the form cavity (23), and

punching means for punching a central hole out of a disc-shaped object (30), said punching means comprising a cylindrical part (31) which forms part of the one mould portion (3), said cylindrical part (31) having a front circumferential edge with a form adapted to the shape of the hole to be punched out of a disc-shaped object, said part (31) being axially movable away from and towards the other mould portion (2), characterized by

adjusting means (64, 66, 67, 69, 70, 71, 72, 73) to adjust the distance between the front-circumferential edge of said cylindrical part (31) and the forming surface of the other mould portion (2) situated opposite to it.

2. Injection mould as claimed in claim 1, characterized in that the adjusting means (64, 66, 67, 69, 70, 71, 72, 73) are operable from the outside.

3. Injection mould as claimedin claim 1 or 2, characterized in that the insert piece (5) is a sheet arranged against a flat wall (4) and that said wall (4) displays at least one recess (18) connectable to an underpressure source.

4. Injection mould as claimed in claim 3, characterized in that the or each recess (18) extends in the circumferential zone of the wall (4).

5. Injection mould as claimed in claim 3 or 4, characterized in that the or each recess (55) is filled with a porous material (56).

6. Injection mould as claimed in claim 5, characterized in that the porous material (56) is a sinter material.

7. Injection mould as claimed in claims 3-6, characterized in that the sheet (5) displays a central hole and that in addition mechanical means (7, 10, 48) are available for setting and holding said sheet (5) in the pre-selected position by gripping on the rim of said hole.

8. Injection mould as claimed in any of the foregoing claims, characterized in that the pressure conduit (24) emerges into the form cavity via a diverging portion.

9. Injection mould as claimed in any one of the preceding claims, characterized in that the wall (4) of the form cavity (23) opposite the mouth of the pressure conduit (24) displays a central recess (41) converging towards said form cavity (23), the bottom of which recess is formed by the end surface of an ejector (43) which serves to eject the part (29) detached from the shaped product (30) in the punching out of the central hole.

10. Injection moulding unit for an injection mould as claimed in any one of the preceding claims, characterized by controlling means for actuating the underpressure source in at least the opened position of the mould (1, 2, 3).

11. Injection mould as claimed in any one of the preceding claims, characterized by a coating of titanium nitride applied to the wall (4) of the form cavity (23) and/or at least on the surface of the insert piece (5) directed towards said cavity (23).

**Patentansprüche**

1. Spritzgußform (1, 2, 3) zur Herstellung scheibenförmig gestalteter Gegenstände (30), welche folgende Teile umfaßt:

wenigstens zwei Formteile (2, 3), die relativ zueinander zwischen einer Schließstellung, in der sie einen Formraum (23) begrenzen, der an eine Druckleitung (24) anschließbar ist, um heißes Plastikmaterial unter Druck in den Hohlraum (23) einzuleiten und einer Öffnungsstellung beweglich sind, in der ein scheibenförmiger Gegenstand (30) entfernt werden kann;

wenigstens ein Einsatzstück (5),

Befestigungsmittel (10, 55, 56), die an eine Unterdruckquelle anschließbar sind, um in einer vorgewählten Stellung wenigstens teilweise durch den Unterdruck das oder jedes Einsatzstück (5) gegen eine Wand (4) des Formhohlraumes (23) zu halten, und

Stanzmittel, um ein zentrales Loch aus dem scheibenförmigen Gegenstand (30) auszustanzen, wobei die Stanzmittel einen zylindrischen Teil (31) aufweisen, der einen Abschnitt des einen Formteils (3) bildet, wobei der zylindrische Teil (31) einen vorderen Umfangsrand mit einer Form aufweist, die der Gestalt des auszustanzenden Loches im scheibenförmigen Gegenstand entspricht, und wobei der Teil (31) axial von dem anderen Formteil (2) weg und nach diesem hin beweglich ist,

gekennzeichnet durch Einstellmittel (64, 66, 67, 69, 70, 71, 72, 73), um den Abstand zwischen dem vorderen Umfangsrand des zylindrischen Teils (31) und der formenden Oberfläche des anderen Formteils (2) einzustellen, der gegenüber hierzu angeordnet ist.

2. Spritzgußform nach Anspruch 1, dadurch gekennzeichnet, daß die Einstellmittel (64, 66, 67, 69, 70, 71, 72, 73) von außen her betätigbar sind.

3. Spritzgußform nach Anspruch 1 oder 2, dadurch gekennzeichnet, daß das Einsatzstück (5) von einem Blatt gebildet ist, welches an einer flachen Wand (4) anliegt, und daß die Wand (4) wenigstens eine Ausnehmung (18) aufweist, die an eine Unterdruckquelle anschließbar ist.

4. Spritzgußform nach Anspruch 3, dadurch gekennzeichnet, daß die oder jede Ausnehmung (18) sich in einer Umfangszone der Wand (4) erstreckt.

5. Spritzgußform nach Anspruch 3 oder 4, dadurch gekennzeichnet, daß die oder jede Ausnehmung (55) mit einem porösen Material (56) angefüllt ist.

6. Spritzgußform nach Anspruch 5, dadurch gekennzeichnet, daß das poröse Material (56) ein Sintermaterial ist.

7. Spritzgußform nach den Ansprüchen 3 bis 6, dadurch gekennzeichnet, daß das Blatt (5) ein Mittelloch aufweist, und daß zusätzlich mechanische Mittel (7, 10, 48) verfügbar sind, um das Blatt (5) in der vorgewählten Stellung anzuordnen und zu halten, indem am Rande des Loches angegriffen wird.

8. Spritzgußform nach einem der vorhergehenden Ansprüche, dadurch gekennzeichnet, daß die Druckleitung (24) über einen divergierenden Abschnitt in den Formholraum austritt.

9. Spritzgußform nach einem der vorhergehenden Ansprüche, dadurch gekennzeichnet, daß die Wand (4) des Formhohlraums (23) gegenüber der Mündung der Druckleitung (24) eine zentrale Ausnehmung (41) aufweist, die nach dem Formhohlraum (23) hin konvergiert, und deren Boden durch die Stirnfläche eines Auswerfers (43) gebildet ist, der dazu dient, den Teil (29) auszuwerfen, der von dem fertigen Endprodukt (30) beim Ausstanzen des zentralen Loches abgefallen ist.

10. Spritzgußformeinheit für eine Spritzgußform nach einem der vorhergehenden Ansprüche, dadurch gekennzeichnet, daß Steuermittel vorgesehen sind, um die Unterdruckquelle wenigstens in der Öffnungsstellung der Form (1, 2, 3) anzuschalten.

11. Spritzgußform nach einem der vorhergehenden Ansprüche, dadurch gekennzeichnet, daß Titannitrid auf die Wand (4) des Formhohlraums (23) und/oder wenigstens auf die Oberfläche des Einsatzstückes (5), welches nach dem Hohlraum (23) gerichtet ist, als Überzug aufgetragen ist.

### Revendications

1. Moule pour injection (1, 2, 3) servant à fabriquer des objets en forme de disque (30) comportant

au moins deux parties de moule (2,3) pouvant mutuellement être déplacées entre une position fermée, dans laquelle elles forment par liaison une cavité (23), ladite cavité (23) étant reliée à un conduit sous pression (24) servant à introduire du plastique chauffé sous pression dans ladite cavité (23), et une position ouverte dans laquelle un objet en forme de disque (30) peut être retiré, au moins une pièce d'insertion (5), des moyens de fixation (10, 55, 56) pouvant être reliés à une source de fluide en sous-pression pour maintenir, dans une position présélectionnée, au moins partiellement du fait de la sous-pression, la ou chacune des pièces d'insertion (5) contre une paroi (4) de la cavité de formage (23), et

des moyens de perforation pour perforer un objet en forme de disque (30) et former un trou central, lesdits moyens de perforation comportant une pièce cylindrique (31) appartenant à une des deux parties de moule (3), ladite pièce cylindrique (31) présentant un bord périphérique avant dont la forme est adaptée à celle du trou résultant de la perforation d'un objet en forme de disque, ladite pièce (31) pouvant être rapprochée et écartée axialement de l'autre partie de moule (2),

caractérisé en ce qu'il présente des moyens de réglage (64, 66, 67, 69, 70, 71, 72, 73) permettant de régler la distance entre le bord périphérique avant de ladite pièce cylindrique (31) et la surface de formage de l'autre partie de moule (2) située à l,opposé.

2. Moule pour injection selon la revendication 1, caractérisé en ce que les moyens de réglage (64, 66, 67, 69, 70, 71, 72, 73) sont actionnables de l'extérieur.

3. Moule pour injection selon la revendication 1 ou 2, caractérisé en ce que la pièce d'insertion (5) est une feuille disposée contre une paroi plane (4) et en ce que ladite paroi (4) présente au moins un évidement (18) pouvant être relié à une source en sous-pression.

4. Moule pour injection selon la revendication 3, caractérisé en ce que le ou chaque creux (18) s'étend dans la zone périphérique de la paroi (4).

5. Moule pour injection selon la revendication 3 ou 4, caractérisé en ce que le ou chaque creux (55) est rempli d'un matériau poreux (56).

6. Moule pour injection selon la revendication 5, caractérisé en ce que le matériau poreux (56) est un matériau fritté.

7. Moule pour injection selon les revendications 3 à 6, caractérisé en ce que la feuille (5) présente un trou central et en ce qu'il dispose en outre de moyens mécaniques (7, 10, 48) pour mettre en place et maintenir ladite feuille (5) dans la position pré-sélectionnée en assurant une prise sur le rebord dudit trou.

8. Moule pour injection selon l'une des revendications suivantes, caractérisé en ce que le conduit sous pression (24) débouche dans la cavité de formage via une partie divergeante (24).

9. Moule pour injection selon l'une des revendications précédentes, caractérisé en ce que la paroi (4) de la cavité de formage (23) à l'opposé de l'embouchure du conduit sous pression (24) présente un évidement central (41) convergeant en direction de ladite cavité de formage (23), le fond dudit évidement étant formé par la surface d'extrémité d'un éjecteur (43) qui sert à éjecter la partie (29) détachée du produit formé (30) dans la perforation du trou central.

10. Unité de moulage pour un moule à injection selon l'une des revendications précédentes, caractérisée en ce qu'elle comporte des moyens de commande servant à actionner la source de sous-pression au moins lorsque le moule (1, 2, 3) est en position ouverte.

11. Moule pour injection selon l'une des revendications précédentes, caractérisé en ce qu'un revêtement au titane nitruré est appliqué sur la paroi (4) de la cavité de formage (23) et/ou au moins sur la surface de la pièce d'insertion (5) en direction de ladite cavité (23).

FIG.1

FIG.2

FIG.3

FIG.4

37

38

39

40

30

35

FIG.5

FIG.6

FIG.8

FIG.9

FIG.7

FIG.10

EP 0 177 991 B1

FIG. 11

7

FIG. 12